(19) Europäisches Patentamt

European Patent Office

Office européen des brevets

(11) Publication number: **0 116 383**
**B1**

(12) **EUROPEAN PATENT SPECIFICATION**

(45) Date of publication of patent specification: **23.04.86**

(21) Application number: **84200057.2**

(22) Date of filing: **18.01.84**

(51) Int. Cl.⁴: **B 01 J 23/42,** B 01 J 35/06,
C 10 G 45/10, G 01 N 31/10

(54) Catalytic hydrodesulphurization of a hydrocarbon oil fraction and method and apparatus for sulphur content determination.

(30) Priority: **15.02.83 FR 8302376**

(43) Date of publication of application:
**22.08.84 Bulletin 84/34**

(45) Publication of the grant of the patent:
**23.04.86 Bulletin 86/17**

(84) Designated Contracting States:
**BE DE FR GB IT NL**

(56) References cited:
**US-A-4 279 737**

**DERWENT JAPANESE PATENT REPORT, vol.
77, no. 25, section H, page 97, London, GB**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Baudot, Alain
c/o Centre de Recherche de Grand-Couronne
F-76530 Grand-Couronne (FR)**
Inventor: **Neel, Emmanuel Alfred
c/o Centre de Recherche de Grand-Couronne
F-76530 Grand-Couronne (FR)**

(74) Representative: **Aalbers, Onno et al
P.O. Box 302
NL-2501 CH The Hague (NL)**

Courier Press, Leamington Spa, England.

## Description

The invention relates to a process for the catalytic hydrodesulphurization of a hydrocarbon oil fraction. The invention also relates to a method for the determination of the sulphur content of a hydrocarbon oil fraction and to an apparatus for that purpose.

Hydrocarbon oil fractions which become available in the oil industry often contain appreciable amounts of sulphur compounds. If these fractions are to be converted with the aid of catalysts that are sulphur-sensitive (which means that they are poisoned and accordingly deactivated by sulphur and its compounds), it is necessary to remove the sulphur from these fractions or to reduce their sulphur content to a very low level. As examples of conversion processes in which sulphur-sensitive catalysts are used may be mentioend processes in which the catalyst at least partly consists of platinum, such as catalytic reforming and catalytic hydroisomerization.

The removal of sulphur compounds from hydrocarbon oil fractions is often accomplished by contacting the fractions in the presence of hydrogen (so-called hydrodesulphurization) at elevated temperature and pressure with a supported catalyst which contains one or more non-noble metals of Group VIB and/or Group VIII of the Periodic Table of Elements or compounds thereof, e.g. a supported catalyst which contains cobalt sulphide and molybdenum sulphide.

For a number of processes (e.g. catalytic reforming with platinum containing catalyst, in particular if the catalyst contains a second metal such as rhenium, germanium or tin) the sulphur content of the hydrocarbon oil fraction to be used as feed must be extremely low, e.g. below 2 ppmw in order to avoid a rapid deactivation of the catalyst. It may happen that the sulphur content of hydrocarbon oil fractions which have been hydrodesulphurized as described above is higher than the maximum allowable for the envisaged subsequent process (e.g. catalytic reforming process) due to too low an activity of the Group VI B/Group VIII supported catalyst mentioned above or to malfunctioning of the hydrodesulphurization process with that catalyst. In such a case a process for further removal of sulphur compounds from the hydrodesulphurized hydrocarbon oil fraction would be attractive. It would also be of much advantage to have a process to determine the amount of sulphur still present in the said hydrodesulphurized hydrocarbon oil fractions. If the sulphur content found is too high for these fractions to be fed to the process in which the sulphur-sensitive catalyst is used, the supply of these fractions to that catalyst can then be interrupted in time.

Supported catalysts which contain platinum have the ability to remove sulphur compounds from hydrocarbon oil fractions in the presence of hydrogen to a very great extent with formation of hydrogen sulphide. However, the capacity to remove cyclic sulphur compounds, in particular aromatic sulphur-containing compounds, such as thiophene and derivatives, is poor, and moreover such catalysts are very quickly deactivated.

There has now been found types of platinum-containing catalysts which do not show the said disadvantages and which are very suitable to be used for the removal from and/or the determination of sulphur in hydrocarbon oil fractions, in particular hydrocarbon oil fractions in which a small amount of sulphur compounds is present, and which may, e.g., have been obtained as a result of a hydrodesulphurization process with non-noble metal catalysts as described above.

Accordingly, the invention provides a process for the catalytic hydrodesulphurization of a hydrocarbon oil fraction, which is characterized in that the hydrocarbon oil fraction is contacted in the presence of hydrogen at elevated temperature with a catalyst which contains platinum whiskers.

Platinum whiskers are metallic filamentary single crystals. They can be prepared according to several methods known in the art, such as reduction of metal halogenides, condensation of the metal from the vapour phase, recrystallization, deposition from a solid solution, and heating of solid metal under controlled conditions, e.g. by passing an electric current through the metal.

The following method is very suitable for the preparation of platinum whiskers by heating under controlled conditions: Onto the surface of the platinum wire or a platinum wire cloth carbon is deposited in an amount by weight of at least 10%, and preferably from 30—50% of the platinum present, followed by burning off the carbon with oxygen or an oxygen-containing gas (e.g. air). The temperature of the platinum comes close to the melting point thereof, and locally may even exceed the melting point. Whiskers are formed on the surface of the platinum, and if desired, the amount thereof may be increased by repeating at least once the carbon deposition followed by burning off the carbon as described above.

For the purpose of the present invention catalysts in which the whiskers are present on the surface of the wires of a platinum wire cloth, are very suitable.

Although it is possible to hydrodesulphurize hydrocarbon oil fractions with relatively high sulphur contents (say above 50 parts by million weight (ppmw) sulphur) according to the present invention, it is preferred to use hydrocarbon oil frctions which contain at most 50 ppmw sulphur and in particular at most 20 ppmw sulphur.

If hydrocarbon oil fractions with greater amounts of sulphur are to be desulphurized it is attractive to remove the greater part of the sulphur therefrom with the aid of a supported catalyst which contains one or more non-noble meals of Group VI B and/or Group VIII or compounds thereof as described above, before the hydrocarbon oil fractions are hydrodesulphurized according to the present invention.

The process according to the invention is particularly attractive for hydrocarbon oil fractions which contain cyclic sulphur compounds, because the removal of these sulphur compounds with other methods meets with great difficulties. As examples of cyclic sulphur compounds may be mentioned aromatic sulphur compounds such as thiophene and monocyclic or polycyclic derivatives thereof.

The process according to the invention is very suitably carried out with hydrocarbon oil fractions which can be obtained from crude mineral oils by atmospheric distillation, preferably those with a boiling range up to 290°C, in particular up to 200°C, such as kerosene, naphtha and gasoline fractions.

As already explained above the feed for the process according to the present invention preferably consists of hydrocarbon oil fractions from which the greater part of the sulphur compounds has been removed by hydrodesulphurization with the aid of a supported Group VI B and/or non-noble Group VIII metals (or compounds thereof), e.g., a sulphided alumina-supported cobalt and molybdenum-containing catalyst.

The process according to the invention is very suitably carried out at a temperature from 300 to 900°C, in particular from 450 to 700°C, and at a pressure from 1 to 70 bar, in particular from 1 to 10 bar.

The hydrogen to be used need not be completely pure hydrogen; in general gas mixtures with a high hydrogen content (such as catalytic reformer off-gas) are very suitable.

The process according to the invention may actually be used for the reduction of the sulphur content of a hydrocarbon oil fraction to be used subsequently in a conversion process with a sulphur-sensitive catalyst. However, in a number of cases other catalytic processes are available for that purpose which are also suitable.

The process according to the invention is applied with the most preference in a method for the determination of the sulphur content of a hydrocarbon oil fraction, in particular in case cyclic sulphur compounds are present, because these compounds are removed with difficulty with other catalysts. The sulphur is converted to hydrogen sulphide.

For the determination of the sulphur content of a hydrocarbon oil fraction sulphided catalysts cannot be used, because there may be an exchange of sulphur between the catalyst and the hydrocarbon oil fraction.

The invention also relates to an apparatus for the determination of the sulphur content of a hydrocarbon oil fraction which comprises a hydrodesulphurization section in which a catalyst which contains platinum whiskers is present, and a hydrogen-sulphite determination section.

The method is extremely suitable for monitoring the sulphur content in hydrocarbon oil fractions to be fed to a process in which a sulphur-sensitive catalyst is used, in order to be able to interrupt the feeding of hydrocarbon oil fractions with unacceptably high sulphur contents to the sulphur-sensitive catalyst.

The hydrocarbon oil fractions in which the sulphur content is to be determined according to the invention preferably have a low sulphur content, e.g. below 50 ppmw and in particular below 20 ppmw. Because in the process of the invention substantially all sulphur compounds, including the cyclic ones, are completely converted with formation of hydrogen sulphide, very small amounts of sulphur (e.g. less than 1 ppmw) can be determined with great accuracy.

The method for the determination of the sulphur content of a hydrocarbon oil fractions according to the invention suitably comprises the hydrodesulphurization of a sample of the fraction by contacting the sample at elevated temperature in the presence of hydrogen with a catalyst which contains platinum whiskers, and the determination of the amount of hydrogen sulphide formed.

Preferably the sample is first subjected to a pyrolysis to convert any heavy hydrocarbons into light or low molecular hydrocarbons, usually methane. The pyrolysis advantageously is carried out at a temperature from 400 to 1000°C. During the pyrolysis not only low molecular weight hydrocarbons are formed but also some hydrogen sulphide is obtained obtained, although not all sulphur, present in the sample, is converted into hydrogen sulphide, not even when the pyrolysis is carried out at a temperature of 1300°C. The gaseous sample is therefore hydrogenated in the presence of a platinum whiskers-containing catalyst, thereby completely converting the sulphur in the sample into hydrogen sulphide. The hydrogenation is preferably carried out at a temperature from 300 to 900°C, in particular from 450 to 700°C. The catalyst is not deactivated, so it does not need regeneration.

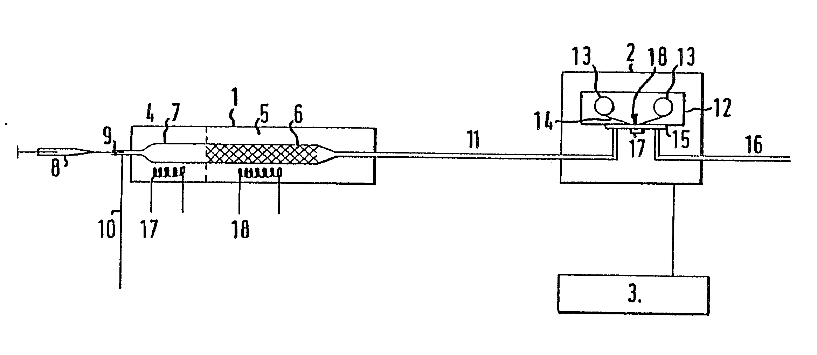

The amount of hydrogen sulphide formed can be determined according to well-known analytical procedures. It is possible to determine the $H_2S$ content coulometrically, e.g. by using a $Ag^+$-ions containing titration cell. Preference is given to a photometric method using the discolouration of lead acetate due to the conversion into lead sulphide. Most preferably a lead acetate comprising tape is used which enables continuous operation. The invention is further elucidated with reference to the figure. The figure schematically shows a sulphur analyzing apparatus, comprising a hydrodesulphurization section 1, a hydrogen sulphide determination section 2 and a recorder 3.

The hydrodesulphurization section 1 comprises a tube 7, passing through a pyrolysis zone 4 and a dehydrogenation zone 5. The part of the tube 7 of the hydrogenation zone 5 contains a platinum wire cloth 6 which is covered with whiskers. The zones 4 and 5 can be heated by any suitable heating means, e.g. electrical heating coils 17 and 18.

A tube 11 connects the hydrogenation zone with the hydrogen sulphide determination section 2, which section comprises a cylinder 12, a gas contacting cell 15, a gas vent 16, and a photometric detection system 17 containing two bridge-connected photoelectric cells. In the cylinder 12 two rollers 13 are provided along which lead acetate tape 14 is wound respectively unwound. The lead acetate tape 14 is contacted with the H₂S-containing gases via an opening in the wall of cylinder 12 (indicated by arrow 18). The photoelectric cells in the photometric system 17 are able to raise an electrical signal which is recorded on the recorder 3. The hydrogen sulphide determination section as used is excellently described in Unted States Patent Specification No. 3,464,799.

In operation a sample of a hydrocarbon oil fraction is injected into the tube 7 by means of a syringe 8 through a septum 9. Hydrogen is added to the fraction via a line 10. Preferably the hydrogen has been humidified before being introduced into the tube 7. After passage through the heated zones 4 and 5, the gaseous effluent is passed into the cell 15. By contacting the lead acetate tape with hydrogen sulphide at the opening 18, the tape discolours due to lead sulphide forming. This involves a change in the light reflected from the tape which change is monitored by the photocells in system 17, involving a signal to the recorder 3. The gas is vented through a tube 16.

Such an apparatus is very suitable used for intermittent analysis of samples of a stream of hydrocarbon oil fractions which is to be contacted with a sulphur-sensitive catalyst. As a matter of course the sampling and analyzing system may be automated, the apparatus giving an alarm signal in case the sulphur content of the hydrocarbon oil stream is unacceptably high.

Example

The catalyst is prepared by specific heat treatment. Platinum wire cloth (1024 mesh/cm² (DIN), wire diameter 0.06 mm) is placed in a quartz tube, which is heated in a tubular electric furnace to 900°C and the platinum is contacted with oxygen for five hours; the tube is then flushed with nitrogen and subsequently the platinum is exposed to hydrogen at 900°C for two hours. The temperature is then lowered to 800°C and hydrogen is replaced by a blend of propane and hydrogen (35 l/h propane+10 l/h hydrogen). At this temperature cracking of propane occurs, resulting in formation of carbon deposits, which cause the clogging of the tube within a few hours. The amount of carbon deposited is about 35 %w of the platinum present.

The temperature of the furnace is raised to 900°C and carbon deposits are then burnt in an oxygen stream. During this step the surface temperature of the platinum reaches the melting point of platinum. After burning off, examination of the wire cloth with an optical microscope shows cracks in the platinum surface and formation of whiskers.

The cracking operation with propane followed by carbon burn-off with oxygen is repeated twice. After the last carbon burn-off the whiskers cover the whole surface of the platinum wires.

In order to determine the sulphur content of a naphtha every 15 seconds 0.5 µl of the said naphtha was injected into a hydrogen stream which was led in an amount of 200 ml/min at 650°C 2 g of a catalyst which had been prepared as described above. The hydrogen sulphide formed was determined by contacting the gas stream emerging from the catalyst with lead acetate impregnated paper and measuring the amount of lead sulphide formed with the aid of a photocell. The conversion of the sulphur present in hhe naphtha to hydrogen sulphide was found to be 100%. Originally the naphtha contained 4 ppmw sulphur in the form of benzthiophene. Several naphthas, which in a number of cases contained aliphatic sulphur compounds besides aromatic ones, with sulphur contents from 0.1 up to 20 ppmw were used for the injections. The conversion of the sulphur present to hydrogen sulphide was always 100%, und no deactivation of the catalyst was experienced.

## Claims

1. A process for the catalytic hydrodesulphurization of a hydrocarbon oil fraction, characterized in that the hydrocarbon oil fraction is contacted in the presence of hydrogen at elevated temperature with a catalyst which contains platinum whiskers.

2. A process according to claim 1, characterized in that the hydrocarbon oil fraction has a boiling range of up to 290°C.

3. A process according to any one of the preceding claims, characterized in that the hydrocarbon oil fractions contain at most 50 parts per million by weight sulphur.

4. A process according to any one of the preceding claims, characterized in that it is carried out at a temperature from 300 to 900°C and a pressure from 1 to 70 bar.

5. A method for the determination of the sulphur content of a hydrocarbon oil fraction which comprises hydrodesulphurization by a process as claimed in any one of the preceding claims followed by determination of the amount of hydrogen sulphide formed.

6. A method as claimed in claim 5, characterized in that a sample of the hydrocarbon oil fraction is subjected to a pyrolysis and then hydrogenated over the catalyst which contains platinum whiskers.

7. A method as claimed in claim 6, characterized in that the pyrolysis is carried out at a temperature from 400 to 1000°C and the hydrogenation at a temperature from 300 to 900°C.

8. A method as claimed in any one of the claims 5 to 7, characterized in that the amount of hydrogen sulphide is determined by means of a photometric method using the discolouration of lead acetate due to the conversion into lead sulphide.

9. Apparatus for the determination of the sulphur content of a hydrocarbon oil fraction which comprises a hydrodesulphurization section in which a catalyst which contains platinum whiskers is present, and a hydrogen sulphide determination section.

10. Apparatus according to claim 9, characterized in that the hydrodesulphurization section comprises a pyrolysis zone, and a hydrogenation zone, both zones provided with heating means, and the hydrogen sulphide determination section comprises a photometric system containing two bridge-connected photoelectric cells.

## Patentansprüche

1. Ein Verfahren zur katalytischen Hydroentschwefelung einer Kohlenwassestoffölfraktion, dadurch gekennzeichnet, daß die Kohlenwasserstoffölfraktion in Gegenwart von Wasserstoff bei erhöhter Temperatur mit einem Katalysator, welcher Platin in Form von Whiskerkristallen enthält, kontaktiert wird.

2. Ein Verfahren gemäß Anspruch 1, dadurch gekennzeichnet, daß die Kohlenwasserstoffölfraktion eine Siedebereich bis zu 290°C aufweist.

3. Ein Verfahren gemäß einem der vorhergehenden Ansprüche, dadurch gekennzeichnet, daß die Kohlenwasserstoffölfraktionen höchstens 50 Gewichtsteile pro Million Schwefel enthalten.

4. Ein Verfahren gemäß einem der vorhergehenden Ansprüche, dadurch gekennzeichnet, daß es bei einer Temperatur zwischen 300 und 900°C und einem Druck von 1 bis 70 bar durchgeführt wird.

5. Eine Verfahrensweise zur Feststellung des Schwefelgehaltes einer Kohlenwasserstoffölfraktion, welche die Hydroentschwefelung durch ein Verfahren, wie in einem der vorhergehenden Ansprüche beansprucht, und anschließend die Feststellung der Menge des gebildeten Schwefelwasserstoffs umfaßt.

6. Eine Verfahrensweise wie in Anspruch 5 beansprucht, dadurch gekennzeichnet, daß eine Probe der Kohlenwasserstoffölfraktion einer Pyrolyse unterworfen wird und anschliessend über den Katalysator, welcher Platin-Whiskers enthält, hydriert wird.

7. Eine Verfahrensweise wie in Anspruch 6 beansprucht, dadurch gekennzeichnet, daß die Pyrolyse bei einer Temperatur von 400 bis 1000°C und die Hydrierung bei einer Temperatur von 300 bis 900°C durchgeführt wird.

8. Eine Verfahrensweise wie in einem der Ansprüche 5 bis 7 beansprucht, dadurch gekennzeichnet daß die Menge an Schwefelwasserstoff mittels einer photometrischen Methode unter Nutzung der Verfärbung von Bleiacetat aufgrund der Umwandlung in Bleisulfid bestimmt wird.

9. Vorrichtung zur Bestimmung des Schwefelgehaltes einer Kohlenwasserstoffölfraktion, welche einen hydroentschwefelungsabschnitt, in welchem ein Katalysator, enthaltend Platin-Whiskers, vorliegt, und einen Schwefelwasserstoffbestimmungsabschnitt umfaßt.

10. Vorrichtung gemäß Anspruch 9, dadurch gekennzeichnet, daß der Hydroentschwefelungsabschnitt eine Pyrolysezone und eine Hydrierungszone umfaßt, wobei beide Zonen eine Heizvorrichtung aufweisen, und daß der Schwefelwasserstoffbestimmungsabschnitt ein photometrisches System mit zwei über eine Brücke verbundenen photoelektrischen Zellen umfaßt.

## Revendications

1. Procédé pour l'hydrodésulfurisation catalytique d'une fraction d'huile hydrocarbonée, caractérisé en ce qu'on met en contact la fraction d'huile hydrocarbonée en présence d'hydrogène à une température élevée avec un catalyseur qui contient des excroissances cristallines de platine.

2. Procédé selon la revendication 1, caractérisé en ce que la fraction d'huile hydrocarbonée a un intervalle d'ébullition allant jusqu'à 290°C.

3. Procédé selon l'une quelconque des revendications précédentes, caractérisé en ce que les fractions d'huile hydrocarbonées contiennent au plus 50 parties en poids par million de soufre.

4. Procédé selon l'une quelconque des revendications précédentes, caractérisé en ce qu'on le conduit à une température allant de 300 à 900°C et à une pression allant de 1 à 70 bars.

5. Procédé pour la détermination de la teneur en soufre d'une fraction d'huile hydrocarbonée comprenant l'hydrodésulfurisation par un procédé tel que revendiqué dans l'une quelconque des revendications précédentes suivie par la détermination de la quantité d'hydrogène sulfuré formée.

6. Procédé selon la revendication 5, caractérisé en ce qu'on soumet un échantillon de la fraction d'huile hydrocarbonée à une pyrolyse puis en ce qu'on hydrogène sur le catalyseur qui contient des excroissances cristallines de platine.

7. Procédé selon la revendication 6, caractérisé en ce que la pyrolyse est conduite à une température allant de 400 à 1000°C et l'hydrogénation à une température allant de 300 à 900°C.

8. Procédé selon l'une quelconque des revendications 5 à 7, caractérisé en ce qu'on détermine la quantité d'hydrogène sulfuré au moyen d'un procédé photométrique en utilisant la décoloration de l'acétate de plomb due à la transformation en sulfure de plomb.

9. Appareil pour la détermination de la teneur en soufre d'une fraction d'huile hydrocarbonée comprenant une section d'hydrodésulfurisation où se trouve un catalyseur qui contient des excroissances cristallines de platine, et une section de détermination de l'hydrogène sulfuré.

10. Appareil selon la revendication 9, caractérisé en ce que la section d'hydrodésulfurisation comprend une zone de pyrolyse, et une zone d'hydrogénation, les deux zones étant munies de moyens de chauffage, et en que ce que la section de détermination d'hydrogène sulfuré comprend un système photométrique contenant deux cellulees photoélectriques reliées par un pont.